# EUROPEAN PATENT SPECIFICATION

(11) **EP 1 011 874 B1**
(45) Date of publication and mention of the grant of the patent: **29.03.2006**
(21) Application number: 98929971.4
(22) Date of filing: 09.06.1998
(51) Int. Cl.: B04B 9/12, F16C 27/00, F16C 37/00, F16J 15/40

(54) **A DEVICE FOR THE SUPPLY OF LIQUID UNDER PRESSURE TO AN ELEMENT AT A ROTATING AXIS**
GERÄT ZUR ZUFUHR VON FLÜSSIGKEIT UNTER DRUCK ZU EINEM ELEMENT EINER ROTIERENDEN ACHSE
DISPOSITIF PERMETTANT D'ALIMENTER UN ORGANE D'UN AXE ROTATIF EN LIQUIDE SOUS PRESSION

(30) Priority: 16.06.1997 SE 9702291
(43) Date of publication of application: 28.06.2000
(73) Proprietor: ALFA LAVAL AB, 147 80 Tumba (SE)
(72) Inventor: KRISTENSEN, Aksel, S-151 73 Södertälje (SE); NILSSON, Sven-Ake, S-646 01 Gnesta (SE); PITKÄMÄKI, Juoko, S-147 50 Tumba (SE); ÖHLANDER, Carl, Peder, S-112 51 Stockholm (SE); SANDBLOM, Robert, S-125 34 Älvsjö (SE)
(74) Representative: Lerwill, John
(86) International application number: PCT/SE1998/001105
(87) International publication number: WO 1998/057752

(56) References cited:
- EP-A- 0 054 502
- CH-A- 556 981
- SE-B- 361 080
- SE-B- 460 458
- US-A- 4 025 130
- US-A- 4 527 912

## Description

The present invention concerns a centrifugal separator shaft suspension device having a stationary casing and a unit including parts, which are rotatable around a rotational axis, and non-rotatable parts, resiliently supported in the casing by at least one elastic element so that the unit can oscillate relative to the casing with the oscillations being damped by the elastic element exerting a radially inwardly directed spring force the unit, the unit including a member into and through which a liquid under pressure passes.

In centrifugal separators provided with a shaft suspension device of this kind the elastic element acts with a well defined radially inwardly directed spring force, which during operation strives to bring the unit back to a central position and damps effectively the oscillating movements of it, which can be very critical during the passage of critical number of revolutions or when heavy unbalances occur during operation. Furthermore, bearing devices of this kind often are cheaper than alternative possible solutions.

In some centrifugal separators you need to be able to supply during operation a liquid under pressure to a member forming a part of the resiliently supported unit, such as with centrifugal separators which demand an effective cooling of the bearings, centrifugal separators in which a gap between a stationary part and a part oscillating during operation is sealed by means of a liquid gap sealing, and centrifugal separators supported hydraulically with rotating parts supported by carrying oil film. However, in the latter case a flow passage is needed through which flows a small amount of oil which leaves the hydraulic bearing through leakage or the like.

There is described in WO-A-89/10794 a centrifugal separator shaft suspension device in which a fan is fixedly mounted on the rotor shaft and in operation sucks air entraining oil through a bearing in which the shaft is journaled, some of the oil drops being collected for lubricating a contact area between an element formed by the bearing housing and elements acting resiliently against the first element.

US-A-3679278 discloses an oil seal arrangement for a rotary shaft journaled in a bearing wherein air is forced through the bearing into a exit passage formed in the shaft and a baffle is provided to prevent escape of oil with the air.

US-A-4025130 is concerned with a flexible damped bearing assembly in which a pressurised fluid is supplied through the stationary housing and is bled through metering ports into a region where it creates a hydrodynamic wedge between the bearing shoes and the shaft.

The object of the present invention is to provide an arrangement which makes it possible to supply liquid to a member in a simple manner with a certain controllable flow, which is made sure under overpressure.

Accordingly the present invention proceeds from a centrifugal separator shaft suspension device comprising a stationary casing and unit including parts which are rotatable around a rotational axis and non-rotatable parts, the unit being resiliently supported in the casing by at least one elastic element so that the unit can oscillate relative to the casing with the oscillations being damped by the elastic element exerting a substantially radially inwardly directed spring force against the unit, and said unit including a member with at least one flow passage into and through which a liquid supplied under pressure passes. A first construction in accordance with the invention is characterised in that a first supply channel portion extending through the stationary casing connected to a liquid source for the supply of liquid under pressure, a second supply channel portion for transmitting the liquid under pressure is connected to the first supply channel portion, and extends through the elastic element, and a third supply channel portion for transmitting the liquid under pressure is connected to the second supply channel portion, extends through a non-rotatable part of the unit, and has an outlet opening in said flow passage.

The elastic element, which may already present in the shaft suspension device for another purpose, is used to form the second supply channel portion, which makes it possible in a very simple manner to connect the second supply channel portion in a hydraulic pressure transmitting way to the first channel portion extending through the casing, which is stationary (i.e. is not rotating and is not oscillating with the oscillating movements of the supported unit), as well as with the third supply channel portion extending through the non-rotating part of the unit.

In an embodiment of the invention there is formed in the stationary casing an inlet chamber, which is sealed off by means of the elastical element, which is annular and surrounds the rotation axis between a part connected to the casing and a part connected to the non-rotatable part of the supported unit, the first channel portion having an outlet opening in the inlet chamber and the second channel portion having an inlet opening in the inlet chamber.

A second construction in accordance with the invention is characterised in that the elastic element is formed by two co-operating annular elastic components surrounding the shaft and from which the said unit is resiliently suspended in the casing and the elastic components sealingly bear against a stationary part connected to the casing and against a non-rotatable annular part of the unit, the non-rotatable annular part being disposed between the elastic components,
- a first supply channel portion extending through the stationary casing is connectable to a liquid source for the supply of liquid under pressure,
- a second supply channel portion for transmitting the liquid under pressure is arranged in the said non-rotatable annular part, and is connected in a hydraulic pressure transmitting way to the first supply channel portion and
- a third supply channel portion for transmitting the liquid under pressure is connected to the second supply channel portion, extends through a non-rotatable part of the unit, and has an outlet opening in said flow passage.

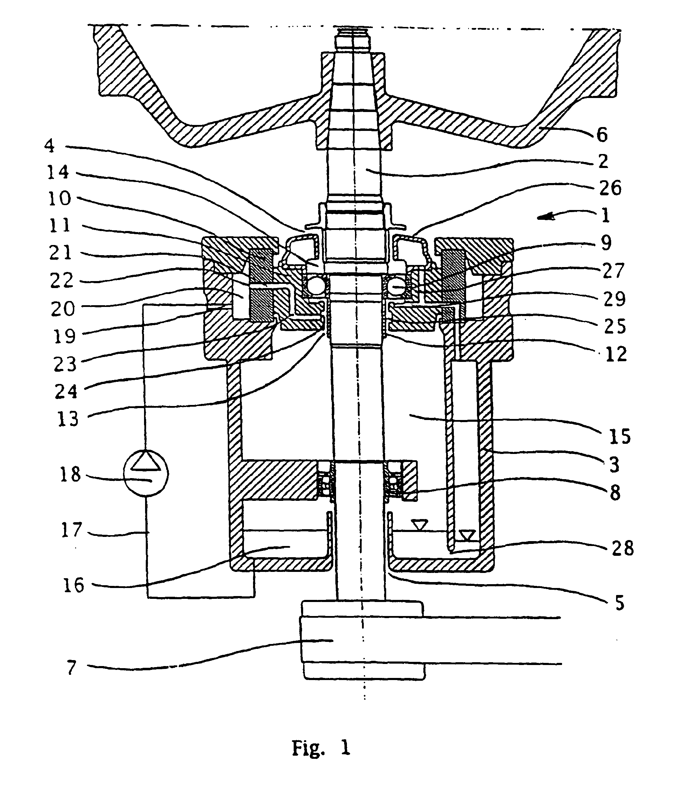

In the following the invention will be described more in detail with reference to the attached drawings, in which figure 1 schematically shows an axial section through a shaft suspension device of a centrifugal separator, according to the present invention,
figure 2 schematically shows an axial section through another shaft suspension device in a centrifugal separator, embodying the present invention, and
figure 3 schematically shows an axial section through a third shaft suspension device in a centrifugal separator embodying the present invention.

The shaft suspension device shown in the figure 1 supports the shaft 2 of the centrifugal separator. The shaft suspension device 1 has a stationary casing 3, which surrounds the shaft 2. In the axial end portions of the casing 3 two openings 4 and 5, respectively, are arranged, through which the shaft 2 extends. On one axial .end of the shaft a rotor 6 is fixedly mounted and on the other axial end of it a belt drive 7 is arranged for the driving of the shaft 2. The shaft 2 is journally supported in a lower bearing 8, which essentially is directly connected to the stationary casing 3, and in an upper bearing 9, which is connected to the stationary casing 3 via an annular elastic element 10. The elastic element 10 abuts against a non-rotatable part 11 of the composed unit, which is resiliently suspended in the casing 3 by means of the elastic element 10. The non-rotatable part 11 consists in this embodiment of the first annular sealing element 11, which extends around the shaft 2 and connects the elastic element 10 to the upper bearing 9 at the same time as it constitutes the bearing housing for the upper bearing 9. Radially inside the first sealing element 11 there is arranged a second annular sealing element 12, which is connected to the shaft 2 around the same and together with the first sealing element 11 forms an annular flow passage 13 surrounding the shaft 2.

The sealing elements 11 and 12 divide a space inside the casing 3 in two compartments 14 and 15, which are each connected to one opening 4 and 5, respectively. To prevent the air or gas volumes from communicating with each other during operation via the through passage 13 this is arranged to be kept filled up with liquid.

For this purpose a liquid source 16 for oil is arranged in the lower part of the shaft suspension device 1, to which a conduit 17 is connected. This conduit is provided with a pump 18 and is connected to a first supply channel portion 19, which opens in a closed chamber 20 radially outside the first sealing element 11. In the elastic element 10 is a second supply channel portion 21, which has an inlet opening 22 in the closed chamber 20 and is thus hydraulically pressure transmittingly connected to the first supply channel portion 19 via the closed chamber 20. In the first sealing element 11 is a third supply channel portion 23, which hydraulically pressure transmittingly is connected to the second supply channel portion 21, and which has an outlet opening 24 in a recess 25 formed in a central portion of the sealing element 11. The recess 25 surrounds the shaft and is open towards the second sealing element 12. The supply channel portions 19, 21 and 23 are flown through during operation by oil under pressure, which fills up the flow passage 13. Thereby, the oil in the flow passage 13 prevents effectively air or other gas from flowing between the two compartments 14 and 15.

The amount of oil, which flows out of the passage 13 in direction towards and out into the one or the other of the two compartments 14 and 15, depends on how long and narrow the flow passage 13 is in the direction towards the one compartment 14 in relation to how long and narrow the flow passage 13 is in the direction towards the other compartment 15. Elements which rotate with the shaft in the compartment 14 create an air circulation, which entrains oil to flow into this compartment 14, and brings a portion of this oil to flow towards and through the second bearing 9 present in this compartment. The oil, which has passed through the bearing 9 is collected in a collecting grove 26, which opens radially inwardly and is connected to a return conduit 27, through which collected oil flows back to the liquid source 17 via a liquid seal 28, which prevents air or gas circulation through the return conduit 27. Most of the oil that flows out through the compartment 14 is conducted directly to the liquid source 17 via a by-pass conduit 29, which in the shown example is connected to the return conduit 27.

Oil is supplied to the flow passage 13 at such a high pressure during operation that the flow passage 13 remains filled up at the pressure difference prevailing between the two compartments 14 and 15. In certain cases capillary forces can be sufficient to keep the flow passage 13 filled up whereas in other cases a substantially higher pressure is needed to keep the flow passage 13 filled up with oil.

In the example shown in figure 1 the compartments 14 and 15 communicate with the atmosphere surrounding the shaft suspension device 1 via the respective openings 4 and 5 but it is quite possible within the scope of the present invention that they communicate via an opening with a more or less closed chamber.

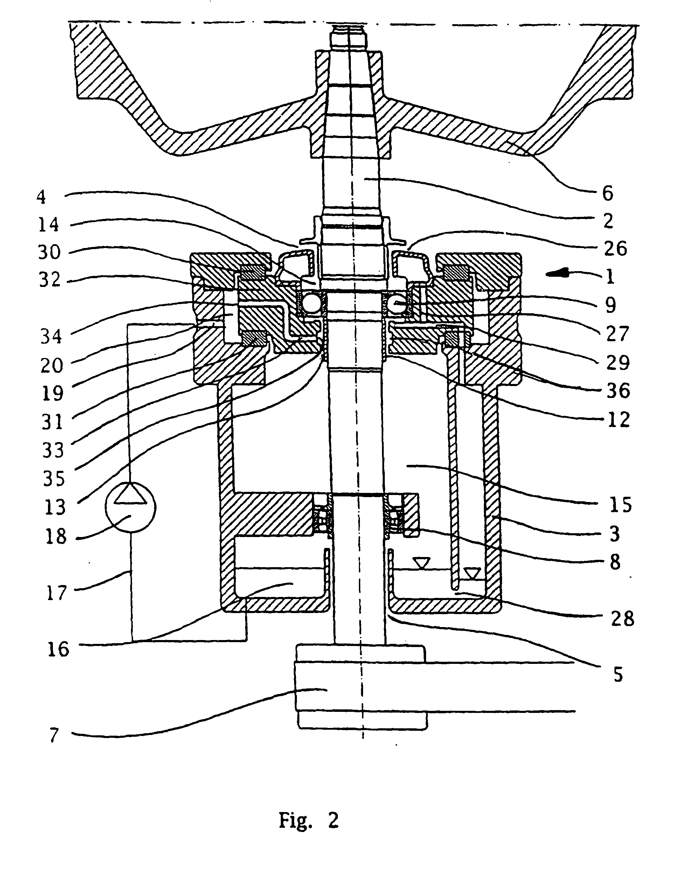

The shaft suspension device shown in figure 2 differs from the shaft suspension device 1, shown in figure 1, by the fact elastic element is formed by two co-operating annular elastic components 30 and 31 surrounding the shaft and by which the supported unit is resiliently suspended in the casing 3, and by the fact that a first sealing element 32 extends radially between the two elastic components 30 and 31. In this sealing element 32 there is arranged a supply channel portion 33, which extends radially between the two elastic components 30 and 31, and which has an inlet opening 34 in the closed chamber 20 and has an outlet opening 35 in a recess 36, which is formed in a central portion of this sealing element 32. The supply channel portion 33 is hydraulically pressure transmittingly connected to the first supply channel portion 19 via the closed chamber 20, and constitutes the second as well as the third supply channel portion.

Other parts of this shaft suspension device are the same as the corresponding parts of the shaft suspension device shown in figure 1 and are denoted by the same reference numbers.

In the two shaft suspension devices shown in figures 1 and 2 the member which is to be supplied with liquid, consists of a liquid gap sealing, a flow gap being constituted by the gap, which during operation is kept filled up with liquid to maintain the sealing function.

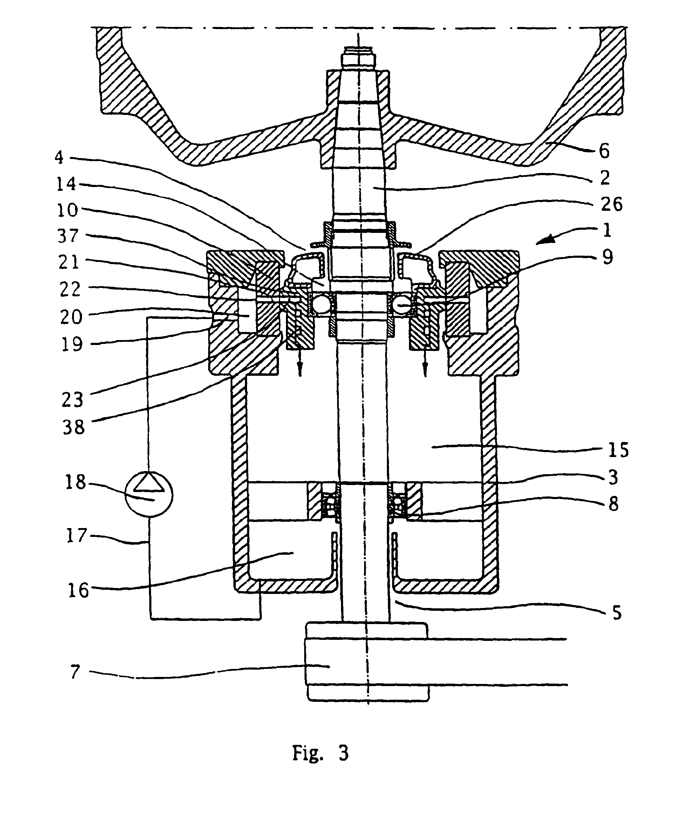

In the shaft suspension device shown in figure 3 the member, which is to be supplied with liquid, instead is constituted by a cooling device 37, and the flow passages are constituted by channels 38 for a cooling liquid arranged in the cooling device 37. The cooling device in this shaft suspension device constitutes a non-rotatable part of the supported unit and it constitutes a bearing housing for the upper bearing 9. The cooling liquid, which has passed through the channels 38, flows out into the compartment 15 and falls down into and is collected in the liquid source 16.

The other parts in this shaft suspension device are also the same as corresponding parts of the shaft suspension device shown in figure 1 and have been given the same reference numbers.

## Claims

1. A centrifugal separator shaft suspension device comprising a stationary casing (3), a unit including parts which are rotatable around a rotational axis and non-rotatable parts, the unit being resiliently supported in the casing (3) by at least one elastic element (10) so that the unit can oscillate relative to the casing with the oscillations being damped by the elastic element (10) exerting a substantially radially inwardly directed spring force against the unit, said unit including a member with at least one flow passage (13) into and through which a liquid passes in use,
**characterised in that**
- a first supply channel portion (19) extending through the stationary casing (3) connectable to a liquid source (16) for the supply of liquid under pressure,
- a second supply channel portion (21) for transmitting the liquid under pressure is connected to the first supply channel portion (19), and extends through the elastic element (10), and
- a third supply channel portion (23) for transmitting the liquid under pressure is connected to the second supply channel portion (21), extends through a non-rotatable part of the unit, and has an outlet opening (24) in said flow passage (13).

2. A device according to claim 1, wherein the elastic element is annular and surrounds the rotational axis between a part connected to the casing (3) and a part connected to a non-rotatable part of said unit, an inlet chamber (20) formed in the stationary casing (3) is sealed off by the elastic element (10), the first channel portion (19) has an outlet opening in the inlet chamber (20) and the second channel portion (21) has an inlet opening (22) in the inlet chamber (20).

3. A centrifugal separator shaft suspension device comprising a stationary casing (3), a unit including parts which are rotatable around a rotational axis and non-rotatable parts, the unit being resiliently supported in the casing (3) by at least one elastic element (10) so that the unit can oscillate relative to the casing with the oscillations being damped by the elastic element (10) exerting a substantially radially inwardly directed spring force against the unit, said unit including a member with at least one flow passage (13) into and through which a liquid passes in use,
**characterised in that**
the elastic element is formed by two co-operating annular elastic components (30, 31) surrounding the shaft and from which the said unit is resiliently suspended in the casing (3), and the elastic components sealingly bear against a stationary part connected to the casing and against a non-rotatable annular part (32) of the unit, the non-rotatable annular part being disposed between the elastic components,
- a first supply channel portion (19) extending through the stationary casing (3) is connectable to a liquid source (16) for the supply of liquid under pressure,
- a second supply channel portion (21) for transmitting the liquid under pressure is arranged in the said non-rotatable annular part (32) and is connected in a hydraulic pressure transmitting way to the first supply channel portion (19), , and
- a third supply channel portion (23) for transmitting the liquid under pressure is connected to the second supply channel portion (21), extends through a non-rotatable part of the unit, and has an outlet opening (24) in said flow passage (13).

4. A device according to claim 3, **characterised in that** the said non-rotatable annular part extends essentially radially between the two elastic components (30, 31).

5. A device according to any one of the preceding claims, wherein the liquid consists of oil.

6. A device according to any one of the preceding claims, wherein said member consists of a liquid gap sealing device.

7. A device according to any one of the preceding claims, wherein said member consists of a cooling device, said flow passages consisting of channels (38) for a cooling liquid.

## Patentansprüche

1. Aufhängevorrichtung für die Welle einer Zentrifuge, umfassend ein stationäres Gehäuse (3) sowie eine Einheit mit Teilen, die um eine Drehachse drehbar sind, und nicht drehbaren Teilen, wobei die Einheit durch mindestens ein elastisches Element (10) federnd im Gehäuse getragen wird, so dass die Einheit relativ zum Gehäuse schwingen kann, wobei die Schwingungen, durch das elastische Element (10) gedämpft werden, das eine im wesentlichen radial nach innen gerichtete Federkraft auf die Einheit ausübt, wobei die Einheit ein Element mit mindestens einem Strömungsdurchgang (13) umfasst, in den und durch den eine Flüssigkeit bei der Verwendung strömt,
**dadurch gekennzeichnet, dass**
- sich ein erster Zufuhr-Durchgangsabschnitt (19) durch das stationäre Gehäuse (3) erstreckt und mit einer Flüssigkeitsquelle (16) für die Zufuhr von unter Druck stehender Flüssigkeit verbunden werden kann,
- ein zweiter Zufuhr-Durchgangsabschnitt (21) zum Übertragen der unter Druck stehenden Flüssigkeit mit dem ersten Zufuhrdurchgangsabschnitt (19) verbunden ist und sich durch das elastische Element (10) erstreckt, und
- ein dritter Zufuhr-Durchgangsabschnitt (23) zum Übertragen der unter Druck stehenden Flüssigkeit mit dem zweiten Zufuhrdurchgangsabschnitt (21) verbunden ist und sich durch einen nicht drehbaren Teil der Einheit erstreckt und eine Auslassöffnung (24) im Strömungsdurchgang (13) aufweist

2. Vorrichtung nach Anspruch 1, wobei das elastische Element ringförmig ist und die Drehachse zwischen einem mit dem Gehäuse (3) verbundenen Teil und einem mit einem nicht drehbaren Teil der Einheit verbundenen Teil umgibt; wobei eine im stationären Gehäuse (3) geformte Einlasskammer (20) durch das elastische Element (10) abgedichtet wird, wobei der erste Durchgangsabschnitt (19) eine Auslassöffnung in die Einlasskammer (20) aufweist und wobei der zweite Durchgangsabschnitt (21) eine Einlassöfnung (22) in die Einlasskammer (20) aufweist

3. Aufhängevorrichtung für die Welle einer Zentrifuge, umfassend ein stationäres Gehäuse (3) sowie eine Einheit mit Teilen, die um eine Drehachse drehbar sind, und nicht drehbaren Teilen, wobei die Einheit durch mindestens ein elastisches Element (10) federnd im Gehäuse getragen wird, so dass die Einheit relativ zum Gehäuse schwingen kann, wobei die Schwingungen durch das elastische Element (10) gedämpft werden, das eine im wesentlichen radial nach innen gerichtete Federkraft auf die Einheit ausübt, wobei die Einheit ein Element mit mindestens einem Strömungsdurchgang (13) umfasst, in den und durch den eine Flüssigkeit bei der Verwendung strömt,
**dadurch gekennzeichnet, dass**
- das elastische Element durch zwei zusammenwirkende ringförmige elastische Komponenten (30, 31) gebildet wird, die die Welle umgeben und an denen die Einheit federnd im Gehäuse (3) aufgehängt ist, und wobei die elastischen Komponenten dicht gegen einen stationären Teil lagern, der mit dem Gehäuse verbunden ist, sowie gegen einen nicht drehbaren ringförmigen Teil (32) der Einheit; wobei der nicht drehbare ringförmige Teil zwischen den elastischen Komponenten angeordnet ist,
- sich ein erster Zufuhr-Durchgangsabschnitt (19) durch das stationäre Gehäuse (3) erstreckt und mit einer Flüssigkeitsquelle (16) für die Zufuhr von unter Druck stehender Flüssigkeit verbunden werden kann,
- ein zweiter Zufuhr-Durchgangsabschnitt (21) zum Übertragen der unter Druck stehenden Flüssigkeit im nicht drehbaren ringförmigen Teil angeordnet ist und mit dem ersten Zufuhrdurchgangsabschnitt (19) auf die Weise verbunden ist, dass hydraulischer Druck übertragen wird, und
- ein dritter Zufuhr-Durchgangsabschnitt (23) zum Übertragen der unter Druck stehenden Flüssigkeit mit dem zweiten Zufuhrdurchgangsabschnitt (21) verbunden ist und sich durch einen nicht drehbaren Teil der Einheit erstreckt und eine Auslassöffnung (24) im Strömungsdurchgang (13) aufweist.

4. Vorrichtung nach Anspruch 3, **dadurch gekennzeichnet, dass** der nicht drehbare ringförmige Teil sich im wesentlichen radial zwischen den beiden elastischen Komponenten (30, 31) erstreckt.

5. Vorrichtung nach einem der vorangegangenen Ansprüche, wobei die Flüssigkeit aus Öl besteht.

6. Vorrichtung nach einem der vorangegangenen Ansprüche, wobei das Element aus einer Abdichtvorrichtung für einen Flüssigkeitsspalt besteht .

7. Vorrichtung nach einem der vorangegangenen Ansprüche, wobei das Element aus einer Kühlvorrichtung besteht, wobei die Strömungsdurchgänge aus Durchgängen (38) für eine Kühlflüssigkeit bestehen.

## Revendications

1. Dispositif de suspension d'arbre de séparateur centrifuge comprenant un logement stationnaire (3), une unité incorporant des parties qui sont rotatives autour d'un axe de rotation et des parties non rotatives, l'unité étant montée de façon élastique dans le logement (3) au moyen d'un élément élastique (10), de sorte que l'unité peut osciller par rapport au logement avec des oscillations amorties par l'élément élastique (10) exerçant une force de ressort dirigée de façon sensiblement radiale vers l'intérieur contre l'unité, ladite unité incorporant un élément avec au moins un passage d'écoulement (13) dans et à travers lequel passe un liquide, en service,
**caractérisé en ce que**
• une première portion de canal d'alimentation (19) s'étendant à travers le logement stationnaire (3) est raccordable à une source de liquide (16) pour l'alimentation de liquide sous pression,
• une seconde portion de canal d'alimentation (21) pour transmettre le liquide sous pression est raccordée à la première portion de canal d'alimentation (19), s'étend à travers l'élément élastique (10), et
• une troisième portion de canal d'alimentation (23) pour transmettre le liquide sous pression est raccordée à la seconde portion de canal d'alimentation (21) et s'étend à travers une partie non rotative de l'unité et présente une ouverture de sortie (24) dans ledit passage d'écoulement (13).

2. Dispositif selon la revendication 1, dans lequel l'élément élastique est annulaire et entoure l'axe de rotation entre une partie raccordée au logement (3) et une partie raccordée à une partie non rotative de ladite unité, une chambre d'admission (20) formée dans le logement stationnaire (3) est rendue étanche par l'élément élastique (10), la première portion de canal (19) présente une ouverture de sortie dans la chambre d'admission (20) et la seconde portion de canal (21) comporte une ouverture d'admission (22) dans la chambre d'admission (20).

3. Dispositif de suspension d'arbre de séparateur centrifuge comprenant un logement stationnaire (3), une unité incorporant des parties qui sont rotatives autour d'un axe de rotation et des parties non rotatives, l'unité étant montée de façon élastique dans le logement (3) au moyen d'un élément élastique (10), de sorte que l'unité peut osciller par rapport au logement avec des oscillations amorties par l'élément élastique (10) exerçant une force de ressort dirigée de façon sensiblement radiale vers l'intérieur contre l'unité, ladite unité incorporant un élément avec au moins un passage d'écoulement (13) dans et à travers lequel passe un liquide, en service,
**caractérisé en ce que**
• l'élément élastique est formé par deux composants élastiques annulaires coopérants (30, 31) entourant l'arbre et à partir duquel ladite unité est accrochée de façon élastique dans le logement (3), et les composants élastiques viennent en appui de façon étanche contre une partie stationnaire raccordée au logement et contre une partie annulaire non rotative (32) de ladite unité, la partie annulaire non rotative étant disposée entre les composants élastiques,
• une première portion de canal d'alimentation (19) s'étendant à travers le logement stationnaire (3) est raccordable à une source de liquide (16) pour l'alimentation de liquide sous pression,
• une seconde portion de canal d'alimentation (21) pour transmettre le liquide sous pression est disposée dans ladite partie annulaire non rotative (32), et est raccordée de façon à transmettre une pression hydraulique à la première portion de canal d'alimentation (19), et
• une troisième portion de canal d'alimentation (23) pour transmettre le liquide sous pression est raccordée à la seconde portion de canal d'alimentation (21) et s'étend à travers une partie non rotative de l'unité et présente une ouverture de sortie (24) dans ledit passage d'écoulement (13).

4. Dispositif selon la revendication 3, **caractérisé en ce que** ladite partie annulaire non rotative s'étend sensiblement radialement entre les deux composants élastiques (30, 31).

5. Dispositif selon l'une quelconque des revendications précédentes, dans lequel le liquide consiste en de l'huile.

6. Dispositif selon l'une quelconque des revendications précédentes, dans lequel l'élément consiste en un dispositif d'étanchéité de liquide à intervalle.

7. Dispositif selon l'une quelconque des revendications précédentes, dans lequel ledit élément consiste en un dispositif de refroidissement et les passages d'écoulement consistent en des canaux (38) pour un liquide de refroidissement.
